(19) Europäisches Patentamt / European Patent Office / Office européen des brevets

(11) **EP 4 446 290 A1**

(12) **EUROPEAN PATENT APPLICATION**

(43) Date of publication:
**16.10.2024  Bulletin 2024/42**

(21) Application number: **23177034.8**

(22) Date of filing: **02.06.2023**

(51) International Patent Classification (IPC):
**C03C 10/00** (2006.01)      **C03C 3/091** (2006.01)
**C03C 4/08** (2006.01)

(52) Cooperative Patent Classification (CPC):
**C03C 10/00; C03C 3/091; C03C 4/08; C03C 4/082;
C03C 4/085; C03C 10/0009**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2023  US 202363459140 P**

(71) Applicants:
• **SCHOTT AG**
**55122 Mainz (DE)**
• **Schott North America, Inc.**
**Rye Brook, NY 10573 (US)**

(72) Inventors:
• **Naß, Peter**
**55120 Mainz (DE)**
• **Carré, Antoine**
**55122 Mainz (DE)**
• **Higby, Paige**
**01521 Holland, MA (US)**
• **Alunni, Dave**
**18436 Jefferson Township, PA (US)**

(74) Representative: **Fuchs Patentanwälte
Partnerschaft mbB
Tower 185
Friedrich-Ebert-Anlage 35-37
60327 Frankfurt am Main (DE)**

(54) **GLASS CERAMIC WITH LOW PHASE VOLUME AND HIGH OPTICAL EXTINCTION IN NUV/VIS/NIR**

(57)    The present invention relates to an electromagnetic radiation absorbing element with a glass-ceramic with Ilmenite and/or crystallites of the formula $(Fe_xMn_yMg_z)TiO_3$ in the crystal phase and a low volume fraction of the crystalline phase (also referred to as low crystalline phase volume) and very high optical extinction coefficient (extinction/path length) in the near ultraviolet (NUV), visible (VIS) and near infrared (NIR) spectral range. The glass-ceramic can be produced and processed with standard glass processing methods such as melting, hot forming, bending, drawing, and/or toughening (thermal and chemical). The present invention also relates to a method of producing the glass-ceramic and to the use of the glass-ceramic.

EP 4 446 290 A1

Figure 3

## Description

The present invention relates to an element with a glass-ceramic capable of a high absorption of electromagnetic radiation especially in the visible spectrum. The invention also relates to a glass-ceramic, with a low volume fraction of the crystalline phase (also referred to as low crystalline phase volume) and very high optical extinction coefficient (extinction/path length) in the visible (VIS) and advantageously in the near ultraviolet (NUV) and near infrared (NIR) spectral range as well. The electromagnetic radiation absorbing element and/or glass-ceramic can be produced and processed with standard glass processing methods such as melting, hot forming, bending, drawing, and/or toughening (thermal and chemical). The present invention also relates to a method of producing the glass-ceramic and to the use of the glass-ceramic.

## Background

Electromagnetic radiation absorbing elements in the meaning of this invention comprise filters, layers, optical components etc.. Electromagnetic radiation absorbing elements as commonly used often comprise glasses. Glasses with moderate to high optical extinction coefficients in the NUV, VIS and NIR are known. Such glasses are also referred to as black glasses due to their black optical appearance. Such glasses are used in various applications where undesired transmittance of light in the respective wavelength range is to be reduced. Glass is a material that is advantageous in this respect for many applications because of its excellent formability. In particular, glass can be formed into various shapes and forms by well-known forming processes.

However, a disadvantage of known black glasses is that very high optical extinction coefficients cannot be achieved. The reduction of transmission of the light in the wavelengths of interest may be sufficient for some applications. However, where an increased reduction of transmission is desired, this can only be achieved by using a black glass with increased thickness which is, however, disadvantageous in many applications due to the increased weight and space requirement associated therewith.

## Details of invention

In this context, it is an object of the present invention to overcome the disadvantages of the prior art and to provide a material that combines a very high optical extinction coefficient in the NUV (near ultraviolet), VIS (visible) and NIR (near infrared) wavelengths with the excellent formability of glass.

This object is solved by the subject-matter of the patent claims.

In the context of the invention, it was found that the absorbing species exhibit a significant higher coefficient of extinction in a crystalline structure than if they were embedded in an amorphous glassy structure. Furthermore, if the crystals exhibit dimensions in the order of wavelengths of UV/VIS and larger, different refractive indices from the matrix scattering processes will contribute in addition to the extinction coefficient.

In an advantageous embodiment, the extinction coefficient is higher than 100 / cm in the entire wavelength range from 350 nm to 700 nm.

In one aspect, the invention relates to an electromagnetic radiation absorbing element with a glass-ceramic comprising a crystalline phase and an amorphous phase. The electromagnetic radiation absorbing element can comprise said glass-ceramic or is represented by the glass-ceramics itself. In other words, the electromagnetic radiation absorbing element can comprise the glass-ceramic or consist of the glass-ceramic. The glass-ceramic has an extinction coefficient higher than 20 / cm in the entire wavelength range from 350 nm to 700 nm. This means that for every wavelength within this range, the extinction coefficient is at least 20 / cm. The crystalline phase comprises Ilmenite an/or an Ilmenite solid solution. Ilmenite is known as $FeTiO_3$. The solid solution might contain $MnTiO_3$ and/or $MgTiO_3$ and/or mixtures of these crystals, resulting in the so called Ilmenite solid solutions if Ilmenite is present.

The named solid solution can also be described as $(Fe_xMn_yMg_z)TiO_3$ solid solution, wherein x+y+z = 1.00, wherein advantageously x is in a range of from 0.2 to 1.00, y is in a range of from 0 to 0.8, and x+y is in a range of from 0.2 to 1.00. In fact, the formula $(Fe_xMn_yMg_z)TiO_3$ refers to Ilmenite for x =1 and to an Ilmenite solid solution for x < 1. Preferably, x is smaller than 1, in particular x is in range of from 0.2 to < 1.00.

In Ilmenite and/or the referred solid solution, the Fe and/or Mn cations are predominantly present in the low oxidation state, namely as Fe(II) and/or Mn(II). Therefore the melting of the glass, which is the precursor of the glass-ceramics, is performed under reductive conditions, which can be achieved for example by the addition of carbon containing substances into the melt. However, of course Fe(II) and/or Mn(II) might be present in the crystalline phase, whereas some Fe(III) and/or Mn(IV) or a mixture of Fe(II) and Fe(III) and/or Mn(II) and Mn(IV) is present in the amorphous phase. In order to provide a consistent description, in the following and in the meaning of this disclosure the term $Fe_2O_3$ and/or $MnO_2$ are used for all oxidation states of Fe and/or Mn respectively. The same applies if the present disclosure refers to Fe and/or Mn. It has to be noted that Mg is in any case always present in the Mg(II) state, represented by MgO.

Preferably, the crystal phase comprises $FeTiO_3$ and optionally one or both of $MnTiO_3$ and $MgTiO_3$. This means that in this embodiment, $FeTiO_3$ is present in the crystal phase, wherein $MnTiO_3$ and/or $MgTiO_3$ can be optionally contained individually or in combination. This means that the crystal phase preferably comprises $FeTiO_3$ and/or a solid solution comprising $(Fe, Mn)TiO_3$ or $(Fe, Mg)TiO_3$ or $(Fe, Mn, Mg)TiO_3$. The crystal phase may also comprise $FeTiO_3$ and a solid solution comprising $(Mn, Mg)TiO_3$. However, advantageously the content of $MnO_2$ should be limited, especially advantageously to an amount of less than 5 mol% of the overall composition. This means that $FeTiO_3$ or a solid solution of $(Fe, Mn)TiO_3$ might provide the most advantageous embodiments. The same applies for $MgO$ with an advantageous upper limit of < 5 mol% which results in a $(Fe, Mg)TiO_3$ or $(Fe, Mn, Mg)TiO_3$ solid solution.

It has been found that such electromagnetic radiation absorbing elements provide an excellent absorption behavior within the visible range of the spectrum. The logarithm of the coefficient of extinction E over the wavelength has predominantly a linear slope within the wavelength range from 400 nm to 700 nm. This means that the logarithm of the actual coefficient of extinction $E_\lambda$ at a given wavelength $\lambda$ within this range deviates at most 20% from a linear slope within the wavelength range from 400 nm to 700 nm.

The linear function within the wavelength range from 400 nm to 700 nm is calculated as

$$log\, E_\lambda = log\, E_{400} + (log\, E_{700} - log E_{400}) \times \frac{\lambda - 400}{700 - 400}$$

Here $E_{400}$ is the extinction coefficient at a wavelength of 400 nm, $E_{700}$ is the extinction coefficient at a wavelength of 700 nm and $\lambda$ is the wavelength of interest, at which $E_\lambda$ is observed.

In the light of the aforesaid this means that within the wavelength range from 400 nm to 700 nm the observed coefficient of extinction $E_\lambda$ at a given wavelength $\lambda$ satisfies the condition

$$0.8 \times (log\, E_{400} + (log E_{700} - log E_{400}) \times \frac{\lambda - 400}{300} \leq log E_\lambda$$

$$\leq 1.2 \times (log\, E_{400} + (log E_{700} - log E_{400}) \times \frac{\lambda - 400}{300}$$

The term "$log E_\lambda$" refers to the decadic logarithm of the observed coefficient of extinction $E_\lambda$ at a given wavelength $\lambda$. The above identified condition indicates that $log E_\lambda$ is within a range of from

$$0.8 \times (log\, E_{400} + (log E_{700} - log E_{400}) \times \frac{\lambda - 400}{300} \text{ to } 1.2 \times (log\, E_{400} + (log E_{700} - log E_{400}) \times \frac{\lambda - 400}{300}$$

This approximately linear wavelength dependence of the extinction coefficient on a logarithmic scale seems to contribute to the low color shift of the element and/or the glass-ceramic material.

Depending on the desired properties, the amount of the crystal phase can be adjusted. It is advantageously foreseen that the crystallites of the crystalline phase are embedded within the amorphous phase and the volume fraction of the crystalline phase is > 0.1 % and $\leq$ 30 vol%, preferably $\leq$ 20 vol%, most preferably $\leq$ 10 vol%, whereas in both cases the minimum of > 0.1% is maintained. These volume fractions provide the advantage, that the element and/or the glass-ceramic material can be processed at least similar than a glass element and/or a glass material. If not indicated otherwise, volume fractions given in the unit vol% in the present disclosure refer to the respective volume fraction as compared to the total volume of the glass ceramic.

As can be derived from the description before, the amorphous phase represents something like a host matrix for the crystalline phase. Within at least the wavelength range from 350 nm to 700 nm, the specific absorption of the crystalline phase is advantageously higher than the specific absorption of the amorphous phase. More advantageously, the crystal phase contributes at least 80% to the overall absorption of the glass-ceramics within said wavelength range, even more advantageously at least 90%, most advantageously at least 96% or approximately 100%.

It was found that the material as described herein can be adapted according to the specific needs in its application. For example, various crystallite sizes can be obtained.

For crystallite sizes smaller than the wavelength, it was found that the absorption predominantly occurs within the crystalline phase and that the minor part, if at all, is a contribution of scattering.

Such smaller crystallite sizes in the range of the VIS wavelength can be obtained if the molten material is cooled down and the crystallites are formed within the melt at temperatures below approximately 800 °C. Larger crystallite sizes can be obtained if the molten material is cooled down to room temperature or held on certain temperatures in a post heat treatment. Such post treatments might be performed at temperatures of about 800 to 850 °C. Such larger crystallites might provide a larger scattering contribution.

It is surprising that such comparably low volume fraction of the crystalline phase as described above is able to provide the described high absorbance. This leads to the conclusion that the intrinsic absorption of the crystallites must be extremely high.

It can also be concluded that the intrinsic and extremely high absorption of the crystallites provides the appearance of a 'neutral black', which could not be achieved by a predominantly absorbing amorphous phase. To achieve this impression, a surprisingly low minimum thickness of the element and/or material is required. A deep black impression can for example be achieved with a thickness of 2 mm and less. This thickness corresponds to the optical pathlength in which the absorption occurs.

In an advantageous embodiment, the crystalline phase comprises crystallites having a mean diameter DC within the range from 1 nm to 2000 nm and a mean refractive index NC within the range from 1.7 to 6, in particular in the VIS spectral range. More advantageous ranges for DC are from 1 nm 1000 nm or from 2 nm to 500 nm or from 2 nm to 200 nm. The refractive index NC of the crystallites can advantageously be from 1.8 to 5, in particular in the VIS spectral range.

The amorphous phase has a refractive index NG. In an advantageous embodiment, NG is within the range from 1.45 to 1.65, in particular in the VIS spectral range. The combination of the aforesaid DC and/or NC values with those NG values allows the contribution of scattering by the crystallites.

As described above, the volume fraction of the crystalline phase is preferably at least 0.1 vol% and at most 30 vol%, wherein the volume fraction of the amorphous phase is at least 70 vol%, and wherein the crystalline phase consists of crystallites of the formula $(Fe_xMn_yMg_z)TiO_3$, wherein $x+y+z = 1.00$, wherein x is in a range of $0.2 \leq x \leq 1$, y is in a range of $0 \leq y \leq 0,8$, z is in an range of $0 \leq z \leq 0.8$. Advantageously, the following conditions are met: $0.2 \leq x + y \leq 1$ and/or $0.2 \leq x + z \leq 1$ and/or $0 \leq y + z \leq 0.8$. Of course, the condition $x + y + z = 1$ is to be met.

Preferably, the glass-ceramic consists of the crystalline phase and the amorphous phase.

The glass-ceramic of the present invention combines very high optical extinction coefficients in the near ultraviolet (NUV), visible (VIS) and near infrared (NIR) spectral range with processability in standard glass processing methods such as hot forming, bending, drawing, and/or toughening (thermal and chemical).

The glass-ceramic can be obtained by heat treatment of a starting glass comprising relevant amounts of $TiO_2$ as well as oxides of iron, manganese and/or magnesium. In order for the desired crystallites of the formula $(Fe_xMn_yMg_z)TiO_3$ to form, it is important that the starting glass comprises $Fe_2O_3$ in sufficient amounts. In order to provide Fe in the required oxidation state, the starting glass is prepared under reducing melting conditions in order to facilitate formation of the desired crystallites of the formula $(Fe_xMn_yMg_z)TiO_3$ upon heat treatment of the starting glass.

For the avoidance of doubt, the term heat treatment as used herein comprises every kind of temperature curve over time, including increasing, holding and/or decreasing of temperature.

Preferably, the mean size of the crystallites is in a range of from 1 nm to 2000 nm, such as for example from 2 to 1500 nm, from 5 to 1200, from 7 to 1000 nm, from 8 to 750 nm, from 9 to 500 nm, from 10 to 320 nm, from 15 nm to 250 nm, from 20 nm to 200 nm, from 25 nm to 150 nm, or from 30 nm to 100 nm. The mean size of the crystallites is preferably at least 1 nm, at least 2 nm, at least 5 nm, at least 7 nm, at least 8 nm, at least 9 nm, at least 10 nm, at least 15 nm, at least 20 nm, at least 25 nm, or at least 30 nm. The mean size of the crystallites is preferably at most 2000 nm, at most 1500 nm, at most 1200 nm, at most 1000 nm, at most 750 nm, at most 500 nm, at most 320 nm, at most 250 nm, at most 200 nm, at most 150 nm, or at most 100 nm. Such mean sizes of the crystallites are particularly advantageous for achieving the desired very high extinction in the NUV, VIS and NIR spectral range.

In some embodiments, the mean size of the crystallites is preferably in a range of from 1 to 20 nm, such as for example from 2 to 18 nm, from 5 to 15 nm, or from 8 to 12 nm. The mean size of the crystallites may preferably be at least 1 nm, at least 2 nm, at least 5 nm, or at least 8 nm. The mean size of the crystallites may preferably be at most 20 nm, at most 18 nm, at most 15 nm, or at most 12 nm.

In some embodiments, the mean size of the crystallites is preferably in a range of from 20 to 300 nm, such as for example from 50 to 275 nm, from 100 to 250 nm, or from 150 to 225 nm. The mean size of the crystallites may preferably be at least 20 nm, at least 50 nm, at least 100 nm, or at least 150 nm. The mean size of the crystallites may preferably be at most 300 nm, at most 275 nm, at most 250 nm, or at most 225 nm.

In some embodiments, the mean size of the crystallites is preferably in a range of from 300 to 2000 nm, such as for example from 500 to 1500 nm, from 700 to 1300 nm, or from 800 to 1200 nm. The mean size of the crystallites may preferably be at least 300 nm, at least 500 nm, at least 700 nm, or at least 800 nm. The mean size of the crystallites may preferably be at most 2000 nm, at most 1500 nm, at most 1300 nm, or at most 1200 nm.

The glass-ceramic may comprise one or more additional crystalline phases in addition to the crystalline phase consisting of crystallites of the formula $(Fe_xMn_yMg_z)TiO_3$. The volume of the one or more additional crystalline phases is advantageously in a range of from 0.0 vol% to 80 vol% as compared to the total volume of the glass-ceramic, more advantageously in a range from 0.0 vol% to 20 vol%. The volume fraction of the one or more additional crystalline phases is advantageously at most 15 vol%. In some embodiments, the volume fraction of the one or more additional crystalline phases may for example be at least 5 vol%.

Particularly preferably, the glass-ceramic is free of additional crystalline phases.

The volume fraction of the crystalline phase consisting of crystallites of the formula $(Fe_xMn_yMg_z)TiO_3$ is preferably in a range of from 0.1 vol% to 30 vol% as compared to the total volume of the glass-ceramic, for example from 0.2 to 20 vol% or 15 vol%, from 0.5 to 10 vol%, from 1.0 to 7.5 vol%, or from 2.0 to 5.0 vol%. The volume fraction of the crystalline phase consisting of crystallites of the formula $(Fe_xMn_yMg_z)TiO_3$ is preferably at least 0.1 vol%, more preferably at least 0.2 vol%, more preferably at least 0.5 vol%, more preferably at least 1.0 vol%, more preferably at least 2.0 vol%. This is particularly advantageous for achieving very high extinction in the NUV, VIS and NIR spectral range. The volume fraction of the crystalline phase consisting of crystallites of the formula $(Fe_xMn_yMg_z)TiO_3$ is preferably at most 30%, at most 20 vol%, at most 15 vol%, at most 10 vol%, at most 7.5 vol%, or at most 5.0 vol%. A comparably low volume fraction of the crystalline phase consisting of crystallites of the formula $(Fe_xMn_yMg_z)TiO_3$ is particularly advantageous for achieving excellent formability and/or processability of the glass-ceramic in glass in standard glass processing methods such as hot forming, bending, drawing, and/or toughening (thermal and chemical).

The glass-ceramic of the invention comprises an amorphous phase. The volume fraction of the amorphous phase is preferably at least 70 vol%, more preferably at least 80 vol% or at least 85 vol%, more preferably at least 90 vol%, more preferably at least 95 vol% as compared to the total volume of the glass-ceramic. A high volume fraction of the amorphous phase is advantageous for formability and/or processability of the glass-ceramic in standard glass processing methods such as hot forming, bending, drawing, and/or toughening (thermal and chemical). The volume fraction of the amorphous phase is preferably at most 99 vol%, at most 98 vol%, at most 97 vol%, or at most 96 vol%. It is advantageous to limit the volume fraction of the amorphous phase for achieving particularly high extinction in the NUV, VIS and NIR spectral range. The volume fraction of the amorphous phase is preferably in a range of from 70 vol% to 99 vol%, in particular from 80vol% or 85 vol% to 98 vol%, from 90 to 97 vol%, or from 95 to 96 vol%.

The volume fractions of the crystalline phase consisting of crystallites of the formula $(Fe_xMn_yMg_z)TiO_3$ and/or of the amorphous phase are preferably determined based on XRD (X-Ray Diffraction).

The amorphous phase has preferably a refractive index at a wavelength NG of 1.45 to 1.65 nm in the VIS spectral range.

The crystalline phase consisting of crystallites of the formula $(Fe_xMn_yMg_z)TiO_3$ preferably has a refractive index NC at a wavelength of 1.8 to 5 in the VIS range.

The glass-ceramic of the present invention is characterized by a very high extinction coefficient in the NUV, VIS and NIR spectral range, in particular in the entire wavelength range from 300 nm to 3000 nm, or in the entire wavelength range from 300 to 1400 nm or in particular from 350 to 700 nm, most often referred to as visible spectral range. The terms "extinction coefficient E" or "optical density per unit length OD" as used herein refer to a measure of how strong the glass-ceramic attenuates transmittance of light of an indicated wavelength $\lambda$ per unit length d. This measure is given in normalized form as the extinction coefficient E in the unit "per cm". In the following, the extinction coefficient is also referred to as simply 'extinction'. The extinction coefficient and OD are determined based on transmittance measurements as follows.

$$E = -\frac{1}{d}\ln T(\lambda)$$

$$OD = -\frac{1}{d}\log_{10} T(\lambda)$$

Light of wavelength $\lambda$ is transmitted through a sample of the glass-ceramic of the invention having a sample thickness "d". Light intensity $I_0$ of the incident light and light intensity $I_1$ of the transmitted are measured. The unit of light intensity is $W/m^2$. Transmittance "T" is defined as the ratio $I_1/I_0$, thus as the percentage of transmitted light intensity. Transmittance T may also be referred to as "external transmittance" and includes losses due to absorption, scattering, reflection and so on. In contrast, "internal transmittance" relates to losses due to absorption and scattering in the glass ceramic, only.

In the above formulas, "d" indicates the sample thickness (i.e. the path length), and "T" indicates the external transmittance (i.e. the percentage of transmitted light intensity) of wavelength $\lambda$.

Preferably, the extinction coefficient E is at least 20/cm, more preferably at least 50 /cm, more preferably at least 100 / cm, more preferably at least 150 / cm, more preferably at least 200 / cm, more preferably at least 250 / cm, more preferably at least 300 / cm, more preferably at least 350 / cm, more preferably at least 400 / cm, more preferably at least 500 /cm in the entire wavelength range from 300 nm to 1400 nm or 350 nm to 700 nm. The extinction coefficient can according to the invention be extremely high so that a definition of an upper limit does not make sense. However, values of up to 1000 / cm or 10 000 / cm or even 100 000 / cm in the VIS range have been observed or seem to be possible.

As described above, it is an advantage of element and/or glass-ceramics with the crystalline phases as described that the element and/or glass-ceramics can be formed as known for glass processes, especially with hot forming. It has been found that surprisingly the softening point of the glass-ceramics with the mentioned crystalline phases is at most 50 °C higher than the starting glass. It is assumed that this is a consequence of the low volume of the crystallites.

The glass-ceramic of the invention may preferably have an advantageous coefficient of mean linear thermal expansion (CTE) in the temperature range from 20°C to 300°C. The CTE may in particular be in a range of from 3.0 to 10.0 ppm/K, from 3.3 to 9.7 ppm/K, from 3.5 to 9.5 ppm/K, from 4.0 ppm/K to 9.0 ppm/K, more preferably from 4.5 to 8.0 ppm/K, more preferably from 5.0 to 7.0 ppm/K. Preferably, the CTE is at least 3.0 ppm/K, at least 3.3 ppm/K, at least 3.5 ppm/K, at least 4.0 ppm/K, more preferably at least 4.5 ppm/K, more preferably at least 5.0 ppm/K. Preferably, the CTE is at ,most 10.0 ppm/K, at most 9.7 ppm/K, at most 9.5 ppm/K, at most 9.0 ppm/K, more preferably at most 8.0 ppm/K, more preferably at most 7.0 ppm/K. The CTE of the glass-ceramic is mainly determined by the CTE of the amorphous phase. Therefore, the CTE can be tailored independent of the extinction coefficient which is a particular advantage regarding freedom of design. The CTE may be determined according to DIN ISO 7991:1998-02.

The glass-ceramic of the invention is not restricted to certain compositions. However, some composition ranges are particularly advantageous for obtaining the desired technical effects particularly well.

In particular, the possible phase volume is determined by the $TiO_2$ content. Preferably, the glass-ceramic comprises $TiO_2$ in an amount of from 1 to 10 mol%.

For each mol $TiO_2$ desired for phase volume of the crystalline phase consisting of crystallites of the formula $(Fe_xMn_yMg_z)TiO_3$, there is needed one mol in sum of Fe(ll) + Mn(ll) + Mg(ll) in order to obtain the desired crystallites of the formula $(Fe_xMn_yMg_z)TiO_3$. Any excess of one or more of the components will end up in the amorphous phase and/or in one or more additional crystalline phases. It is desirable that a major amount of total $TiO_2$, $Fe_2O_3$, $MnO_2$ and MgO is present in the crystalline phase consisting of crystallites of the formula $(Fe_xMn_yMg_z)TiO_3$ and not in the amorphous phase or in one or more additional crystalline phases. Therefore, the molar amount of $TiO_2$ on the one hand and the sum of the molar amounts of $Fe_2O_3$, $MnO_2$ and MgO on the other hand are preferably comparably similar. Preferably, the ratio of the molar amount of $TiO_2$ and the sum of the molar amounts of $Fe_2O_3$, $MnO_2$ and MgO is in a range of from 0.50 to 2.00, more preferably from 0.75 to 1.50, more preferably from 0.80 to 1.25, more preferably from 0.90 to 1.10, more preferably from 0.95 to 1.05, more preferably from 0.98 to 1.02, more preferably from 0.99 to 1.01. MgO is advantageously present in an amount < 5 mol%, and most advantageously in an amount of 0 mol%.

As described earlier, the terms $Fe_2O_3$ and $MnO_2$ are used independently from the oxidation state of Fe and Mn but is instead used to summarize the referring oxidation states within the crystallite solid solution and/or the amorphous phase.

The sum of the molar amounts of $Fe_2O_3$, $MnO_2$ and MgO is preferably in a range of from 0.1 to < 15 mol%.

The molar amount of $Fe_2O_3$ is preferably in a range of from 0.1 to 5 mol%.

The molar amount of $MnO_2$ is preferably in a range of from 0 to 5 mol%.

The molar amount of MgO is preferably in a range of from 0 to < 5 mol%.

Preferably, the glass-ceramic comprises the following components in the indicated amounts (in % by mol):

| Component | Amount (mol%) |
| --- | --- |
| $SiO_2$ | 45-75 |
| $Al_2O_3$ | 2-15 |
| $B_2O_3$ | 5-20 |
| $Li_2O$ | 0-5 |
| $Na_2O$ | 0-10 |
| $K_2O$ | 2-15 |
| CaO | 0-5 |
| BaO | 0-5 |
| ZnO | 0-5 |
| $TiO_2$ | 1-20 |

(continued)

| Component | Amount (mol%) |
|---|---|
| $ZrO_2$ | 0-2 |
| $Fe_2O_3$ | 0.1-5 |
| $MnO_2$ | 0-5 |
| MgO | 0-<5 |
| Sum $R_2O$ | 5-20 |
| Sum RO | 0-5 |

More preferably, the glass-ceramic comprises the following components in the indicated amounts (in mol%):

| Component | Amount (mol-%) |
|---|---|
| $SiO_2$ | 50-70 |
| $Al_2O_3$ | 3-12 |
| $B_2O_3$ | 8-15 |
| $Li_2O$ | 0-3 |
| $Na_2O$ | 0.5-5 |
| $K_2O$ | 5-12 |
| CaO | 0-3 |
| BaO | 0-3 |
| ZnO | 0-3 |
| $TiO_2$ | 1.5-15 |
| $ZrO_2$ | 0-1 |
| $Fe_2O_3$ | 0.1 - 4.8 |
| $MnO_2$ | 0-5 |
| MgO | 0-2 |
| Sum $R_2O$ | 7-15 |
| Sum RO | 0-3 |

The term "Sum $R_2O$" refers to the sum of the amounts of alkali metal oxides in the glass-ceramic, in particular to the sum of the amounts of $Li_2O$, $Na_2O$ and $K_2O$.

The term "Sum RO" refers to the sum of the amounts of alkaline earth metal oxides and ZnO in the glass-ceramic, in particular to the sum of the amounts of MgO, CaO, SrO, BaO and ZnO.

The glass-ceramic of the invention may comprise one or more coloring agent selected from the group consisting of $Cr_2O_3$, $V_2O_5$, NiO, CoO and combinations of two or more thereof. Preferably, the total amount of coloring agent in the glass-ceramic is in a range of from 50 ppm to 500 ppm by mol. Preferably, the total amount of coloring agent in the glass-ceramic is at least 50 ppm. Preferably, the total amount of coloring agent in the glass-ceramic is at most 500 ppm. Possibly, the glass-ceramic comprises $Cr_2O_3$ and/or $V_2O_5$ in an amount of from 50 ppm to 500 ppm by mol. Preferably, the glass-ceramic comprises $Cr_2O_3$ and/or $V_2O_5$ in an amount of at least 50 ppm. Preferably, the glass-ceramic comprises $Cr_2O_3$ and/or $V_2O_5$ in an amount of at most 500 ppm.

Where the composition of the glass-ceramic is indicated above in terms of the relative amounts of the simple oxides "$Cr_2O_3$", "$V_2O_5$", "NiO", "CoO", and "$TiO_2$", this is not meant to imply any indication as to the oxidation state of the respective components. For example, the indication "$Cr_2O_3$" is not intended to be limited to indicate the amount of chromium(III) in the glass-ceramic. Rather, the term is used to cover all chromium in all oxidation states present in the glass-ceramic. The same holds true for "$Cr_2O_3$", "$V_2O_5$", "$NiO$", "$CoO$", and "$TiO_2$", respectively.

The present invention also relates to a method for producing a glass-ceramic, in particular for producing a glass-ceramic of the present invention, the method comprising the following steps:

a) Providing a starting glass comprising $TiO_2$ in an amount of 1 to 20 mol%, as well as $Fe_2O_3$ and optionally $MnO_2$ and/or MgO, wherein $Fe_2O_3$ is present in to the amount of at least 0.1 mol%, wherein the step of providing the starting glass includes melting glass raw materials under reducing conditions and cooling the melt for obtaining the starting glass, and

b) heat treating the starting glass for obtaining the glass-ceramic, wherein the heat treatment includes thermal treatment of the starting glass at a temperature corresponding to a viscosity in a range of from $10^5$ to $10^{11}$ dPas, in particular $10^6$ to $10^{10}$ dPas, $10^7$ to $10^{10}$ dPas or $10^8$ to $10^{10}$ dPas, for a duration of from 1 to 20 hours.

The present invention also relates to a method for producing a glass-ceramic, in particular for producing a glass-ceramic of the present invention, the method comprising the following steps:

a) Providing a starting glass comprising $TiO_2$ in an amount of 1 - 20 mol%, as well as $Fe_2O_3$ and optionally at least one of $MnO_2$ and MgO, wherein the total amount of $Fe_2O_3$, $MnO_2$ and MgO is at least 0.1 mol%, wherein advantageously the step of providing the starting glass includes melting glass raw materials under reducing conditions and cooling the melt for obtaining the starting glass, and

b) heat treating the starting glass for obtaining the glass-ceramic, wherein heat treating includes thermal treatment of the starting glass and thereby creating the crystallites at temperature stages, the temperature stages include at least a stage of 600 to 700 °C and/or a stage of 700 to 800 °C and/or a stage of 800 to 1000 °C, advantageously a combination of at least two of the stages.

The possible phase volume is determined either by the $TiO_2$ or by the sum of $Fe_2O_3$+ $MnO_2$+MgO. Preferably, the starting glass comprises $TiO_2$ in an amount of from 1 to 20 mol%. Embodiments might comprise up to 15 mol% or up to 10 mol% $TiO_2$ respectively. The upper limits can especially be combined with the lower limits of 1 mol% and/or 1.5 mol%.

The preferred and advantageous ranges of the components are described above.

The molar amount of MgO in the starting glass is preferably in a range of from 0 to <5 mol%. However, advantageous the amount of MgO is limited to <4 mol%, especially at most 3 mol%. An advantageous embodiment does not contain MgO, unless at most impurities, which might occur to at most 0.3 mol%.

Advantageously, the starting glass comprises the following components in the indicated amounts (in mol%):

| Component | Amount (mol%) |
|---|---|
| $SiO_2$ | 45-75 |
| $Al_2O_3$ | 2-15 |
| $B_2O_3$ | 5-20 |
| $Li_2O$ | 0-5 |
| $Na_2O$ | 0-10 |
| $K_2O$ | 2-15 |
| CaO | 0-5 |
| BaO | 0-5 |
| ZnO | 0-5 |
| $TiO_2$ | 1-20 |
| $ZrO_2$ | 0-2 |
| $Fe_2O_3$ | 0.1-5 |

(continued)

| Component | Amount (mol%) |
|---|---|
| $MnO_2$ | 0-5 |
| MgO | 0- <5 |
| Sum $R_2O$ | 5-20 |
| Sum RO | 0-5 |

More preferably, the starting glass comprises the following components in the indicated amounts (in mol%):

| Component | Amount (mol%) |
|---|---|
| $SiO_2$ | 50-70 |
| $Al_2O_3$ | 3-12 |
| $B_2O_3$ | 8-15 |
| $Li_2O$ | 0-3 |
| $Na_2O$ | 0.5-5 |
| $K_2O$ | 5-12 |
| CaO | 0-3 |
| BaO | 0-3 |
| ZnO | 0-3 |
| $TiO_2$ | 1.5-15 |
| $ZrO_2$ | 0-1 |
| $Fe_2O_3$ | 0.1-4.8 |
| $MnO_2$ | 0-5 |
| MgO | 0-2 |
| Sum $R_2O$ | 7-15 |
| Sum RO | 0-3 |

The term "Sum $R_2O$" refers to the sum of the amounts of alkali metal oxides in the starting glass, in particular to the sum of the amounts of $Li_2O$, $Na_2O$ and $K_2O$.

The term "Sum RO" refers to the sum of the amounts of alkaline earth metal oxides and ZnO in the starting glass, in particular to the sum of the amounts of MgO, CaO, SrO, BaO and ZnO.

The starting glass may comprise one or more coloring agent selected from the group consisting of $Cr_2O_3$, $V_2O_5$, NiO, CoO and combinations of two or more thereof. Preferably, the total amount of coloring agent in the starting glass is in a range of from 50 ppm to 500 ppm by mol. Preferably, the total amount of coloring agent in the glass-ceramic is at least 50 ppm. Preferably, the total amount of coloring agent in the starting glass is at most 500 ppm.

Preferably, the starting glass comprises $Cr_2O_3$ and/or $V_2O_5$ in an amount of from 50 ppm to 500 ppm by mol. Preferably, the glass-ceramic comprises $Cr_2O_3$ and/or $V_2O_5$ in an amount of at least 50 ppm. Preferably, the glass-ceramic comprises $Cr_2O_3$ and/or $V_2O_5$ in an amount of at most 500 ppm.

Where the composition of the starting glass is indicated above in terms of the relative amounts of the simple oxides "$Cr_2O_3$", "$V_2O_5$", "NiO", "CoO", and "$TiO_2$", this is not meant to imply any indication as to the oxidation state of the respective components. For example, the indication "$Cr_2O_3$" is not intended to be limited to indicate the amount of chromium(III) in the starting glass. Rather, the term is used to cover all chromium in all oxidation states present in the starting glass. The same holds true for "$Cr_2O_3$", "$V_2O_5$", "NiO", "CoO", and "$TiO_2$", respectively.

It is preferred that reducing melting conditions are applied during production of the starting glass. This is particularly advantageous for formation of crystallites of the formula $(Fe_xMn_yMg_z)TiO_3$ within the heat treatment. The reducing conditions are preferably obtained by addition of carbohydrates, in particular sugar, to the glass raw materials. Additionally, in order to achieve particularly well results, comparably high temperatures may be applied during melting. Advantageously, temperatures in a range of from 1500°C to 1700°C, more preferably from 1550°C to 1650°C are applied during melting. The melting temperature may preferably be at least 1500°C, more preferably at least 1550°C. The melting temperature may preferably be at most 1700°C, more preferably at most 1650°C. In case of gas burner heating of the melt, the ratio oxygen/gas can be decreased in order to achieve or support reducing conditions.

The temperature at which the crystallites are formed is preferably corresponding to a viscosity in a range of from $10^5$ to $10^{11}$ dPas, in particular $10^6$ to $10^{10}$ dPas, $10^7$ to $10^{10}$ dPas or $10^8$ to $10^{10}$ dPas. Such temperatures are particularly advantageous for achieving extraordinary high extinction coefficients in the NUV, VIS and NIR spectral range.

At the named temperatures, in particular crystallites of the formula $(Fe_xMn_yMg_z)TiO_3$ having a mean size in the range of from 1 to 2000 nm may form.

The duration of the crystallite formation is preferably in a range of from 1 to 20 hours, more preferably from 2 to 15 hours. The named duration is preferably at least 1 hour, more preferably at least 2 hours. The duration is preferably at most 20 hours, more preferably at most 15 hours.

The heating rate for heating the starting glass to the required temperature is preferably in a range of from 1 to 15 K/min, more preferably from 2 to 10 K/min. The heating rate is preferably at least 1 K/min, more preferably at least 2 K/min. The heating rate is preferably at most 15 K/min, more preferably at most 10 K/min.

The present invention also relates to the use of the glass-ceramic of the present invention, in particular in the fields of fiber optics, optical filters, pigment free ceramic decoration, or as (ultra-) thin glass or cover glass. The invention comprises use in fiber optics, optical filter (for example Lidar), pigment free ceramic decoration (especially for inkjet), and/or colored/strengthened (ultra-) thin glasses.

The described use also comprises the application as cover glass of electronic devices or of at least a part of the housing of an electronic device or as part of a housing of a household device.

The present invention also relates to colored bulk glass, powders, coatings, fibers, tubes, rods and/or wafers comprising or consisting of the glass-ceramic of the present invention.

## Description of the Figures

Figure 1 is an SEM picture of a glass-ceramic of the invention with a magnification of 200,000x. The scale bar indicates 100 nm.

Figure 2 shows the dependence of the extinction of two sample glass-ceramics of the invention on the wavelength within the spectral range from 350 to 800 nm. The extinction is shown on the y-axis on a logarithmic scale and the wavelength is shown on the x-axis.

Figure 3 is a differential scanning calorimetry (DSC) curve showing the temperature on the x-axis and the DSC signal (in mW/mg) on the y-axis. The temperature profile underlying the curve was an increasing temperature profile corresponding to a descending viscosity. Exothermic reactions in the sample are shown as positive peaks.

Figure 4 shows the extinction within a broad spectral range.

## Examples

### 1. Starting glass

A starting glasses comprising $TiO_2$, $Fe_2O_3$ and further components according to the following table were produced under reducing melting conditions at a melting temperature of 1700°C. The table shows the components in mol%.

| Component | Example No (mol%) | | | |
|---|---|---|---|---|
| | 1 | 2 | 3 | 4 |
| $SiO_2$ | 69.3 | 62.1 | 70.0 | 68.3 |
| $Al_2O_3$ | 4.0 | 3.6 | 4.0 | 3.9 |
| $B_2O_3$ | 12.5 | 11.0 | 12.4 | 12.1 |

(continued)

| Component | Example No (mol%) | | | |
|---|---|---|---|---|
| | 1 | 2 | 3 | 4 |
| $Li_2O$ | 0.0 | 0.0 | 0.0 | 0.0 |
| $Na_2O$ | 1.6 | 1.4 | 1.6 | 1.5 |
| $K_2O$ | 7.2 | 6.4 | 7.2 | 7.1 |
| CaO | 0.0 | 0.0 | 0.0 | 0.0 |
| BaO | 0.0 | 0.0 | 0.0 | 0.0 |
| ZnO | 0.0 | 0.0 | 0.0 | 0.0 |
| $TiO_2$ | 2.3 | 6.6 | 2.5 | 2.3 |
| $ZrO_2$ | 0.0 | 0.0 | 0.0 | 0.0 |
| $Fe_2O_3$ | 1.6 | 4.6 | 2.3 | 0.2 |
| $MnO_2$ | 1.5 | 4.3 | 0.0 | 4.6 |
| MgO | 0.0 | 0.0 | 0.0 | 0.0 |
| Sum $R_2O$ | 8.8 | 7.8 | 8.8 | 8.6 |
| Sum RO | 0.0 | 0.0 | 0.0 | 0.0 |

**2. Heat treatment step**

The resulting starting glass was heat treated for 10 hours at a temperature of 730°C (heat treatment step).

**3. Glass-ceramic**

The resulting glass-ceramic had an amorphous phase and a crystalline phase consisting of crystallites of the formula $(Fe_xMn_yMg_z)TiO_3$. The volume fraction of the amorphous phase was 97.5 vol% and the volume fraction of the crystalline phase consisting of crystallites of the formula $(Fe_xMn_yMg_z)TiO_3$ was 2.5 vol%. The volume fractions were determined based on XRD (X-Ray Diffraction).

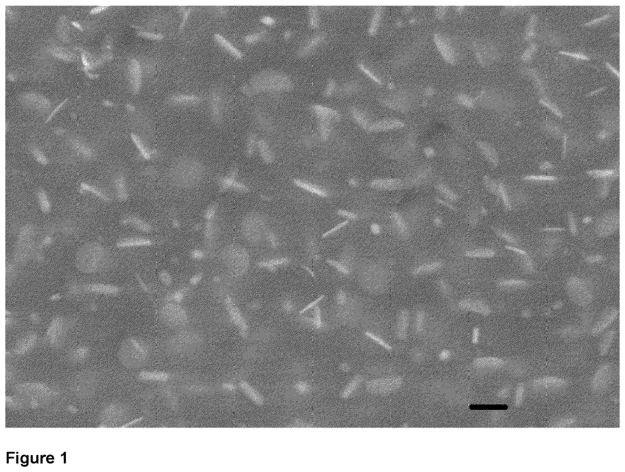

Crystallite sizes in the range of from 5 to 200 nm were observed in SAXS analysis and scanning electron microscopy (SEM) as shown in Figure 1. The mean size of the crystallites was 37 nm.

Very thin samples having a thickness of 60 $\mu$m and 70 $\mu$m, respectively, were produced by slice and polishing.

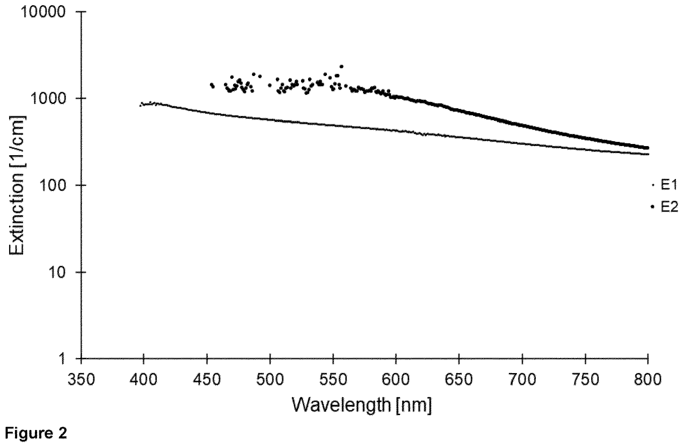

The glass-ceramic had a very high extinction as shown in Figure 2 as it was measured with the Examples No 1 and No 2 of the aforesaid table. In Figure 2, the extinction is drawn against the wavelength. The measuring points indicated with E1 represent example No 1, the measuring points indicated as E2 represent example No 2. As can be seen, the examples show very high extinctions. The extinction in this logarithmic scale is very homogeneous in the visible spectral range and fulfills the linear approximation as described above.

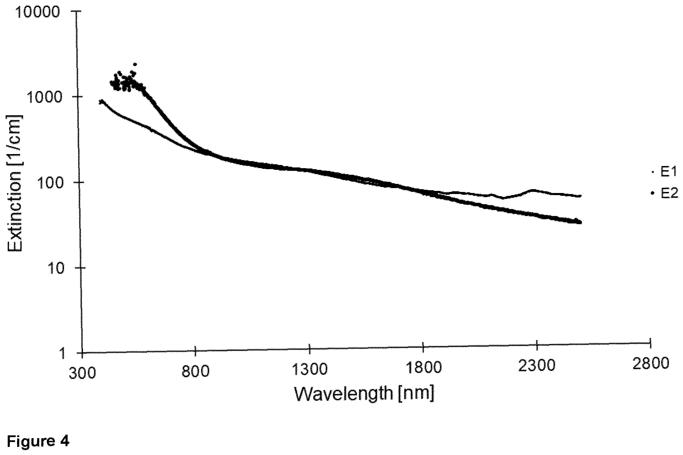

The extinction dependence on the wavelength in a broader spectral range is shown in Figure 4. The same examples No 1 represented as E1 and example No 2 as E2 are incorporated into the diagram. As can be seen, the glass ceramics provide a high absorption within a broad spectral range as well. This enables applications requiring absorption within a very broad wavelength range.

**4. Temperature dependence of crystallite formation**

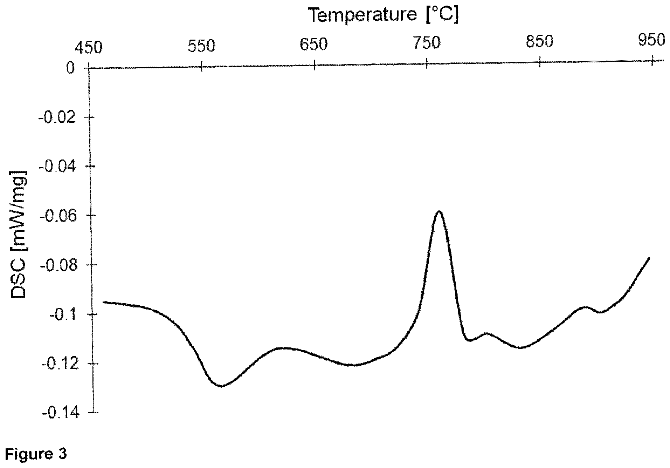

A DSC experiment was done in order to investigate the temperature dependence of crystallite formation. A sample of a starting glass was subjected to a temperature profile in which the temperature was raised from 380°C to 1000°C with a rate of 5.0 K/min. The sample weight was 35.9 mg. The sample was positioned in a crucible. An empty crucible of the same type was used as reference. The sample crucible and the reference crucible were placed in thermally insulated furnaces. Then the temperature of both chambers was controlled so that the same temperature was always present on both sides. The electrical power that was required to obtain and maintain this state was then recorded. The DSC signal shown in Figure 3 is the ratio of this electrical power and the sample weight. The DSC experiment was done under argon atmosphere.

In the DSC experiment as shown in Figure 3, a positive peak (exothermic reaction) indicates crystallization. The experimental results shown in Figure 3 suggest a 2-step crystal formation based on a moderate signal of crystallization at 610°C and a stronger signal at 760°C.

In another DSC experiment, a first peak was present at 650°C indicating forming of small ilmenite (FeTiO$_3$) crystallites at a viscosity of $10^{10}$ dPas. At 730°C larger crystallites of the formula (Fe$_x$Mn$_y$Mg$_z$)TiO$_3$ were formed at $10^8$ dPas. Beyond 1000°C all crystallites were dissolved in the melt at $10^5$ dPas.

The invention can be summarized by the following observations. These observations shall not limit the scope of the invention and can be combined in any manner.

1. An electromagnetic radiation absorbing element with a glass-ceramic comprising a crystalline phase and an amorphous phase having an extinction coefficient higher than 20 / cm in the entire wavelength range from 350 nm to 700 nm, preferably higher than 100 / cm in the entire wavelength range from 350 nm to 700 nm, wherein the crystalline phase comprises Ilmenite and/or crystallites of the formula (Fe$_x$Mn$_y$Mg$_z$)TiO$_3$, wherein x+y+z = 1.00.

2. The electromagnetic radiation absorbing element of the preceding observation, wherein x is in a range of from 0.2 to 1.00, y is in a range of from 0 to 0.8, and x+y is in a range of from 0.2 to 1.00.

3. The electromagnetic radiation absorbing element of at least one of the preceding observations, wherein in the wavelength range from 400 nm to 700 nm the logarithm of the extinction coefficient E$_\lambda$ at a given wavelength $\lambda$ is within a range of +/- 20% of an extrapolation calculated by

$$log\, E_\lambda = log\, E_{400} + (log\, E_{700} - log E_{400}) \times \frac{\lambda - 400}{700 - 400}$$

wherein E$_{400}$ is the extinction coefficient at a wavelength of 400 nm and E$_{700}$ is the extinction coefficient at a wavelength of 700 nm.

4. The electromagnetic radiation absorbing element of at least one of the preceding observations, wherein the crystallites of the crystalline phase are embedded within the amorphous phase and the volume fraction of the crystallite phase is > 0.1 % and ≤ 30 vol%, preferably ≤ 20 vol%, most preferably ≤ 10 vol%.

5. The electromagnetic radiation absorbing element of at least one of the preceding observations, wherein at least in the wavelength range from 350 nm to 700 nm the specific absorption of the crystalline phase is higher than the specific absorption of the amorphous phase.

6. The electromagnetic radiation absorbing element of at least one of the preceding observations, wherein the crystallite phase comprises crystallites having a mean diameter DC within the range from 1 nm to 2000 nm and a mean refractive index NC within the range from 1.7 to 6.

7. The electromagnetic radiation absorbing element of at least one of the preceding observations, wherein the amorphous phase has a refractive index NG within the range from 1.45 to 1.65.

8. The electromagnetic radiation absorbing element with a glass-ceramic comprising a crystalline phase and an amorphous phase, wherein the volume fraction of the crystalline phase is at least 0.1 vol% and at most 30 vol%, wherein the volume fraction of the amorphous phase is at least 70 vol%, and wherein the crystalline phase consists of crystallites of the formula (Fe$_x$Mn$_y$Mg$_z$)TiO$_3$, wherein x+y+z = 1.00, wherein advantageously x is in a range of from 0.2 to 1.00, y is in a range of from 0 to 0.8, and x+y is in a range of from 0.2 to 1.00.

9. The glass-ceramic of observation 8, wherein z = 0.00.

10. The glass-ceramic of at least one of the preceding observations, wherein the ratio of the molar amount of TiO$_2$ and the sum of the molar amounts of Fe$_2$O$_3$, MnO$_2$ and MgO in the glass-ceramic is in a range of from 0.50 to 2.00.

11. The glass-ceramic of at least one of the preceding observations, wherein the mean size of the crystallites is in a range of from 1 nm to 2000 nm, in particular from 1 nm to 1000 nm, advantageously from 2 nm to 500 nm, in particular from 2 nm to 200 nm.

12. The glass-ceramic of at least one of the preceding observations, wherein the glass-ceramic comprises one or more additional crystalline phases in a volume fraction of from 0.0 vol% to 80 vol% as compared to the total volume of the glass-ceramic.

13. The glass-ceramic of at least one of the preceding observations, wherein the volume fraction of the amorphous phase is at least 70 vol%.

14. The glass-ceramic of at least one of the preceding observations, wherein the extinction coefficient of the glass-ceramic is at least 50/cm in the entire wavelength range from 300 nm to 1400 nm.

15. The glass-ceramic of at least one of the preceding observations, wherein the glass-ceramic comprises the following components in the indicated amounts (in mol%):

| Component | Amount (mol%) |
|-----------|---------------|
| $SiO_2$ | 45-75 |
| $Al_2O_3$ | 2-15 |
| $B_2O_3$ | 5-20 |
| $Li_2O$ | 0-5 |
| $Na_2O$ | 0-10 |
| $K_2O$ | 2-15 |
| CaO | 0-5 |
| BaO | 0-5 |
| ZnO | 0-5 |
| $TiO_2$ | 1-20 |
| $ZrO_2$ | 0-2 |
| $Fe_2O_3$ | 0.1-5 |
| $MnO_2$ | 0-5 |
| MgO | 0-<5 |
| Sum $R_2O$ | 5-20 |
| Sum RO | 0-5 |

16. The glass-ceramic of at least one of the preceding observations, wherein the glass-ceramic comprises the following components in the indicated amounts (in mol%):

| Component | Amount (mol.-%) |
|-----------|-----------------|
| $SiO_2$ | 50-70 |
| $Al_2O_3$ | 3-12 |
| $B_2O_3$ | 8-15 |
| $Li_2O$ | 0-3 |
| $Na_2O$ | 0.5-5 |
| $K_2O$ | 5-12 |
| CaO | 0-3 |
| BaO | 0-3 |
| ZnO | 0-3 |
| $TiO_2$ | 1.5-15 |
| $ZrO_2$ | 0-1 |
| $Fe_2O_3$ | 0.1 - 4.8 |
| $MnO_2$ | 0-5 |
| MgO | 0-1 |
| Sum $R_2O$ | 7-15 |
| Sum RO | 0-3 |

17. The glass-ceramic of at least one of the preceding observations, wherein y is at least 0.1 and/or wherein advantageously the amount of $MnO_2$ in the glass-ceramic is more than 0.5 mol%.

18. The glass-ceramic of at least one of the preceding observations, wherein the glass-ceramic comprises one or more coloring agent selected from the group consisting of $Cr_2O_3$, $V_2O_5$, NiO, CoO and combinations of two or more thereof in a total amount of from 50 ppm to 500 ppm by mol.

19. The glass-ceramic of at least one of the preceding observations, wherein the coefficient of mean linear thermal expansion (CTE) in the temperature range from 20°C to 300°C is in a range of from 3.0 ppm/K to 10.0 ppm/K.

20. The glass-ceramic of at least one of the preceding observations, wherein the extinction coefficient at a wavelength of 550 nm is at least 200/cm.

21. A method for producing a glass-ceramic of at least one of the preceding observations, the method comprising at least the following steps:

a) Providing a starting glass comprising $TiO_2$ in an amount of 1 - 20 mol%, as well as $Fe_2O_3$ and optionally at least one of $MnO_2$ and MgO, wherein the total amount of $Fe_2O_3$, $MnO_2$ and MgO is at least 0.1 mol%, wherein advantageously the step of providing the starting glass includes melting glass raw materials under reducing conditions and cooling the melt for obtaining the starting glass, and

b) heat treating the starting glass for obtaining the glass-ceramic, wherein heat treating includes thermal treatment of the starting glass and thereby creating the crystallites at temperature stages, the temperature stages include at least a stage of 600 to 700 °C and/or a stage of 700 to 800 °C and/or a stage of 800 to 1000 °C, advantageously a combination of at least two of the stages.

22. The method according to the previous observation, wherein the reducing conditions are obtained by addition of carbohydrates, in particular sugar, to the glass raw materials.

23. The method according to at least one of the observations , wherein the forming of the crystallites is performed at a temperature of at least 600°C.

24. Use of the glass-ceramic of at least one of in the observations the fields of fiber optics, optical filters, as (ultra-) thin glass or cover glass of electronic devices or of at least a part of the housing of an electronic device or as part of a housing of a household device.

The invention has the advantage, that the provided element and/or the described glass ceramics absorbs electromagnetic radiation, especially in the visible spectrum, very effectively. Thereby it provides a very high of extinction. Moreover, due to the high extinction and the in principle linear dependence of the logarithm of the extinction from the wavelength within the visible spectrum, the appearance of the provided element and/or glass ceramics is a deep black, advantageously without a noticeable color shift for the human eye. Due to the element and/or material being a glass ceramics, the properties such as crystallite size and amount of crystalline phase within the amorphous phase can be adapted according to requirements of the intended use. The provided element and/or glass ceramics can be formed with the known methods for glass processing, especially hot-forming.

**Claims**

1. An electromagnetic radiation absorbing element comprising or consisting of a glass-ceramic, the glass-ceramic comprising a crystalline phase and an amorphous phase, the glass-ceramic having an extinction coefficient higher than 20 / cm in the entire wavelength range from 350 nm to 700 nm, preferably higher than 100 / cm in the entire wavelength range from 350 nm to 700 nm, wherein the crystalline phase comprises Ilmenite and/or crystallites of the formula $(Fe_xMn_yMg_z)TiO_3$, wherein x+y+z = 1.00.

2. The electromagnetic radiation absorbing element of claim 1, wherein x is in a range of from 0.2 to 1.00, y is in a range of from 0 to 0.8, and x+y is in a range of from 0.2 to 1.00.

3. The electromagnetic radiation absorbing element of at least one of the preceding claims, wherein in the wavelength range from 400 nm to 700 nm the logarithm of the extinction coefficient $E_\lambda$ at a given wavelength $\lambda$ is within a range of +/- 20% of a extrapolation calculated by

$$log\,E_\lambda = log\,E_{400} + (log\,E_{700} - log\,E_{400}) \times \frac{\lambda - 400}{700 - 400}$$

wherein $E_{400}$ is the extinction coefficient at a wavelength of 400 nm and $E_{700}$ is the extinction coefficient at a wavelength of 700 nm.

4.  The electromagnetic radiation absorbing element of at least one of the preceding claims, wherein the crystallites of the crystalline phase are embedded within the amorphous phase and the volume fraction of the crystallite phase is > 0.1 vol% and $\leq$ 30 vol%, preferably $\leq$ 20 vol%, most preferably $\leq$ 10 vol% or < 5 vol% as compared to the total volume of the glass ceramic.

5.  The electromagnetic radiation absorbing element of at least one of the preceding claims, wherein at least in the wavelength range from 350 nm to 700 nm the specific absorption of the crystalline phase is higher than the specific absorption of the amorphous phase.

6.  The electromagnetic radiation absorbing element of at least one of the preceding claims, wherein the crystalline phase comprises crystallites having a mean diameter DC within the range from 1 nm to 2000 nm and a mean refractive index NC within the range from 1.7 to 6.

7.  The electromagnetic radiation absorbing element of at least one of the preceding claims, wherein the amorphous phase has a refractive index NG within the range from 1.45 to 1.65.

8.  The electromagnetic radiation absorbing element of at least one of the preceding claims, wherein the volume fraction of the crystalline phase is at least 0.1 vol% and at most 30 vol%, wherein the volume fraction of the amorphous phase is at least 70 vol%, and wherein the crystalline phase consists of crystallites of the formula $(Fe_xMn_yMg_z)TiO_3$, wherein x+y+z = 1.00, wherein x is in a range of from 0.2 to 1.00, y is in a range of from 0 to 0.8, and x+y is in a range of from 0.2 to 1.00.

9.  The electromagnetic radiation absorbing element of at least one of the preceding claims, wherein in the glass-ceramics y is at least 0.2 and/or wherein the amount of $MnO_2$ in the glass-ceramic is more than 0.50 mol%.

10. The electromagnetic radiation absorbing element of at least one of the preceding claims, wherein the glass-ceramic comprises the following components in the indicated amounts (in mol.-%):

| Component | Amount (mol.-%) |
|---|---|
| $SiO_2$ | 45-75 |
| $Al_2O_3$ | 2-15 |
| $B_2O_3$ | 5-20 |
| $Li_2O$ | 0-5 |
| $Na_2O$ | 0-10 |
| $K_2O$ | 2-15 |
| CaO | 0-5 |
| BaO | 0-5 |
| ZnO | 0-5 |
| $TiO_2$ | 1-20 |
| $ZrO_2$ | 0-2 |
| $Fe_2O_3$ | 0.1-5 |
| $MnO_2$ | 0-5 |
| MgO | 0- <5 |
| Sum $R_2O$ | 5-20 |

(continued)

| Component | Amount (mol.-%) |
|---|---|
| Sum RO | 0-5 |

11. A method for producing a glass-ceramic and/or an electromagnetic radiation absorbing element of at least one of the preceding claims, the method comprising at least the following steps:

a) Providing a starting glass comprising $TiO_2$ in an amount of 1 - 20 mol%, as well as $Fe_2O_3$ and optionally at least one of $MnO_2$ and MgO, wherein the total amount of $Fe_2O_3$, $MnO_2$ and MgO is at least 0.1 mol%, wherein advantageously the step of providing the starting glass includes melting glass raw materials under reducing conditions and cooling the melt for obtaining the starting glass, and

b) heat treating the starting glass for obtaining the glass-ceramic, wherein heat treating includes thermal treatment of the starting glass and thereby creating the crystallites at temperature stages, the temperature stages include at least a stage of 600 to 700 °C and/or a stage of 700 to 800 °C and/or a stage of 800 to 1000 °C, advantageously a combination of at least two of the stages.

12. The method of claim 11, wherein the method comprises obtaining reducing conditions by addition of carbohydrates, in particular sugar, to the glass raw materials.

13. Use of the electromagnetic radiation absorbing element of at least one of claims 1 to 10 in the fields of fiber optics, optical filters or as (ultra-) thin glass or as cover glass of electronic devices or of at least a part of the housing of an electronic device or as part of a housing of a household device.

Figure 1

Figure 2

Figure 3

Figure 4

Europäisches
Patentamt

European
Patent Office

Office européen
des brevets

# EUROPEAN SEARCH REPORT

**Application Number**

EP 23 17 7034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 652 032 A1 (EMC SERVICES [FR]) 10 May 1995 (1995-05-10) * examples * ----- | 1,2 | INV. C03C10/00 C03C3/091 C03C4/08 |
| X | WO 2015/126900 A1 (CORNING INC [US]) 27 August 2015 (2015-08-27) * examples * * tables * * figures * * claims * * paragraphs [0071], [0072], [0076], [0105] – [0106] * ----- | 1-13 | |
| X | US 2008/227616 A1 (PEUCHERT ULRICH [DE] ET AL) 18 September 2008 (2008-09-18) * table 8 * * paragraphs [0003], [0026], [0063], [0064], [0092] * ----- | 1-13 | |
| A | WO 2014/014798 A1 (CORNING INC [US]; COMTE MARIE JACQUELINE MONIQUE [FR] ET AL.) 23 January 2014 (2014-01-23) * paragraph [0016] * ----- | 12 | |

**TECHNICAL FIELDS SEARCHED (IPC)**

C03C

The present search report has been drawn up for all claims

| Place of search | Date of completion of the search | Examiner |
|---|---|---|
| Munich | 10 October 2023 | Omegna, Anna |

EPO FORM 1503 03.82 (P04C01)

## ANNEX TO THE EUROPEAN SEARCH REPORT
## ON EUROPEAN PATENT APPLICATION NO.

EP 23 17 7034

10-10-2023

| Patent document cited in search report | | | Publication date | Patent family member(s) | | | Publication date |
|---|---|---|---|---|---|---|---|
| EP 0652032 | A1 | | 10-05-1995 | CA | 2176118 | A1 | 18-05-1995 |
| | | | | EP | 0652032 | A1 | 10-05-1995 |
| | | | | FI | 961942 | A | 28-06-1996 |
| | | | | FR | 2712214 | A1 | 19-05-1995 |
| | | | | JP | H09509089 | A | 16-09-1997 |
| | | | | WO | 9513116 | A1 | 18-05-1995 |
| WO 2015126900 | A1 | | 27-08-2015 | CN | 107124879 | A | 01-09-2017 |
| | | | | CN | 113248154 | A | 13-08-2021 |
| | | | | EP | 3107870 | A1 | 28-12-2016 |
| | | | | JP | 6643243 | B2 | 12-02-2020 |
| | | | | JP | 7023262 | B2 | 21-02-2022 |
| | | | | JP | 2017509574 | A | 06-04-2017 |
| | | | | JP | 2020023437 | A | 13-02-2020 |
| | | | | KR | 20160123384 | A | 25-10-2016 |
| | | | | TW | 201538446 | A | 16-10-2015 |
| | | | | TW | 201934514 | A | 01-09-2019 |
| | | | | US | 2015239772 | A1 | 27-08-2015 |
| | | | | US | 2018148370 | A1 | 31-05-2018 |
| | | | | US | 2020223745 | A1 | 16-07-2020 |
| | | | | WO | 2015126900 | A1 | 27-08-2015 |
| US 2008227616 | A1 | | 18-09-2008 | DE | 112005000110 | A5 | 16-04-2009 |
| | | | | JP | 2007517753 | A | 05-07-2007 |
| | | | | TW | 200526533 | A | 16-08-2005 |
| | | | | TW | 200533623 | A | 16-10-2005 |
| | | | | US | 2008227616 | A1 | 18-09-2008 |
| | | | | WO | 2005066086 | A2 | 21-07-2005 |
| | | | | WO | 2005066990 | A2 | 21-07-2005 |
| WO 2014014798 | A1 | | 23-01-2014 | CN | 104703937 | A | 10-06-2015 |
| | | | | CN | 108191229 | A | 22-06-2018 |
| | | | | CN | 112851115 | A | 28-05-2021 |
| | | | | DE | 202013012811 | U1 | 20-01-2020 |
| | | | | EP | 2874959 | A1 | 27-05-2015 |
| | | | | EP | 3632861 | A1 | 08-04-2020 |
| | | | | JP | 6130503 | B2 | 17-05-2017 |
| | | | | JP | 6491688 | B2 | 27-03-2019 |
| | | | | JP | 2015527970 | A | 24-09-2015 |
| | | | | JP | 2017149644 | A | 31-08-2017 |
| | | | | KR | 20150038177 | A | 08-04-2015 |
| | | | | KR | 20190133802 | A | 03-12-2019 |
| | | | | TW | 201412676 | A | 01-04-2014 |
| | | | | US | 2014023865 | A1 | 23-01-2014 |
| | | | | US | 2015344351 | A1 | 03-12-2015 |
| | | | | US | 2018022638 | A1 | 25-01-2018 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 17 7034

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2023

| Patent document cited in search report | Publication date | Patent family member(s) | | Publication date |
|---|---|---|---|---|
| | | US | 2019092679 A1 | 28-03-2019 |
| | | US | 2022002187 A1 | 06-01-2022 |
| | | WO | 2014014798 A1 | 23-01-2014 |

EPO FORM P0459

For more details about this annex : see Official Journal of the European Patent Office, No. 12/82